# EUROPEAN PATENT APPLICATION

(11) **EP 3 875 516 A1**
(43) Date of publication of application: **08.09.2021**
(21) Application number: 20160548.2
(22) Date of filing: 03.03.2020
(51) Int. Cl.: C08J 3/22, C08K 3/013, C08K 3/34, C08K 5/00, C08K 5/3492, H05B 6/64, C08L 77/06, C08L 77/02, C08K 3/22, C08K 3/26

(54) **COMPONENT FOR ELECTRICAL HOUSEHOLD APPLIANCES**

(71) Applicant: ELECTROLUX APPLIANCES AKTIEBOLAG, 105 45 Stockholm (SE)
(72) Inventor: KLEIN, Gerhard, 91541 Rothenburg ob der Tauber (DE); BEISSBARTH, Rainer, 91541 Rothenburg ob der Tauber (DE); Krämer, Thomas, 91541 Rothenburg ob der Tauber (DE)
(74) Representative: Electrolux Group Patents

(57) **Abstract**

The present invention relates to a component for electrical household appliances, a method for manufacturing the same and a household appliance comprising the component. Moreover, the present invention relates to the use of a composition for manufacturing a flame resistant component for electrical household appliances.

## Description

The present invention relates to a component for electrical household appliances, a method for manufacturing the same and a household appliance comprising the component. Moreover, the present invention relates to the use of a composition for manufacturing a flame resistant component for electrical household appliances.

Having good mechanical properties, good electric properties, and good transparency, polyamides, among other thermoplastic resins are widely used as engineering plastics in components of household appliances, office automation equipment, electrical and electronic appliances, building materials, etc.

Polyamides like other thermoplastic resins and components made thereof have a high oxygen index and are flammable. Components for household appliances and office automation equipment are often exposed to high temperatures, especially components that are in close proximity to control electronics, used as housing for power electronics, battery packs or used in hobs, ovens and/or microwave devices, cooking appliances, like hobs, suction hoods, in particular combo hobs (hobs with integrated suction hood), and the like which increases the risk of inflammation. Especially in the fields of household appliances, office automation equipment, concretely for applications to housings of office automation equipment and household appliances, to housings of electrical and electronic instruments, notebook-type personal computers and others, and to battery packs, compositions with improved flame retardancy are desired and necessary to satisfy the requirement for safe operation of those equipment and appliances. The components may also be used in any household appliances having a motor and/or compressor, like refrigerators and/or dish washers, or in small domestic appliances, like mixers, blenders, vacuum cleaners, toasters, for decreasing the risk of inflammation.

To ensure fire safety legal regulations are in force in most countries world-wide. In the EU, components for household appliances have to pass fire hazard tests including the glow wire test (IEC60695-2-11/12) and the ball pressure test for thermal deformation (IEC 60695-10-2).

The state of the art proposes using halogen-containing flame retardants or phosphorus compounds to ensure fire safety. However, due to environmental effects and legislative developments, halogens, halogen-containing flame retardants, phosphorus and phosphorus containing flame retardants should no longer be used.

The object of the present invention is to provide a component for household appliances and/or office automation equipment having improved mechanical properties such as impact resistance and having good flame retardancy even though essentially being free of halogen- and phosphorus-based flame retardants, and to provide components of household appliances and office automation equipment, housings of electrical and electronic appliances made by forming the composition. The component should be environmentally friendly and exhibit excellent flame retardancy and mechanical properties.

Another object of the invention is to provide a composition that can be used for manufacturing a flame resistant component for electrical household appliances. The composition preferably exhibits excellent workability.

Surprisingly, the present inventors found that using a composition as described below solves the above problems. The composition for use according to the invention comprises:
40 to 50 wt.-% of raw polyamides
30 to 40 wt.-% mineral filler,
5 to 15 wt.-% of a masterbatch, and
0 to 15 wt.-% additives,
   wherein the masterbatch comprises bi-and/or polyfunctional monomers and a masterbatch polymer, and wherein wt.-% refers to the total weight of the composition for manufacturing a flame resistant component for electrical household appliances.

Moreover, the invention proposes a component for electrical household appliances and/or office automation equipment made of a composition comprising:
40 to 50 wt.-% of raw polyamides,
30 to 40 wt.-% mineral filler,
5 to 15 wt.-% of a masterbatch, and
0 to 15 wt.-% additives,
   wherein the masterbatch comprises bi-and/or polyfunctional monomers and a masterbatch polymer, and wherein wt.-% refers to the total weight of the composition.

The term "flame resistant" refers to components that pass the glow wire test (IEC60695-2-11/12). In context of the present invention, components passing the glow wire test are also understood as having an excellent flame retardancy.

The term "raw polyamide" refers to the fact that the polyamide in the composition in contrast to polyamide that may be part of the masterbatch, is crosslinkable. This means, the raw polyamide has residues that can engage in crosslinks with the bi-and/or polyfuntional monomers of the masterbatch.

Preferably, the raw polyamide of the composition according to the present invention is selected from PA 6, PA 6.6, PA 6.9, PA 6.12, PA 11 and/or PA 12 or mixtures thereof. More preferably, the raw polyamide in the composition according to the present invention is selected from PA 6 or PA 6.6, or mixtures thereof; most preferably, the polyamide is PA 6.6. The polyamide that may be present in the masterbatch may be the same or may differ from the raw polyamide in the composition. One advantage of using polyamide is that it contributes to a good workability of the composition and has good mechanical properties. Other advantages of polyamides are increased long-term service temperature and short-term temperature resistance in comparison with other polymers, i.e. polypropylene. Preferably, PA containing polymers withstand temperatures of at least 30 °C, more preferably temperatures of at least 50 °C.

The masterbatch preferably, comprises 1 to 45 wt.-% bi-and/or polyfunctional monomers; and 55 to 99 wt.-% of a masterbatch polymer, wherein wt.-% refers to the total weight of the masterbatch. More preferably, the masterbatch comprises 20 to 30 wt.-% bi-and/or polyfunctional monomers; and 70 to 80 wt.-% of a masterbatch polymer, wherein wt.-% refers to the total weight of the masterbatch. A masterbatch according to the present invention is described in DE 10 2006 017 346 A1.

The amount of bi-and/or polyfunctional monomers is crucial for curing the composition according to the present invention. During the curing process, the bi-and/or polyfunctional monomers may form a network with the raw polyamides present in the composition. If the amount of bi-and/or polyfunctional monomers is too small, crosslinking of the bi-and/or polyfunctional monomers with the raw polyamides in the composition results in a fragmentary or incomplete network. The resulting polymer body does not exhibit the desired stability. If the amount of bi-and/or polyfunctional monomers is too high, too many crosslinks may be formed during the curing process resulting in a polymer body that lacks the desired mechanical properties, in particular elasticity.

Preferably, the bi-and/or polyfunctional monomers of the masterbatch are crosslinkable by radiation. Advantageously, this means that the composition according to the present invention is crosslinkable by radiation treatment. The terms "radiation crosslinkable" and "radiation curable" are used interchangeably within the present application.

More preferably, the crosslinking of the bi-and/or polyfunctional monomers of the masterbatch is achieved by UV-, β-, gamma- and/or electron beam radiation treatment. This means, that the composition according to the present invention is crosslinkable by UV-, β-, gamma- and/or electron beam radiation treatment. Crosslinking by radiation is advantageous as it allows adjusting the crosslinking reaction precisely. In turn this ensures high quality of the resulting polymer. Moreover, the chemical, mechanical and thermal durability, including abrasion resistance and stress cracking resistance may be increased.

One further advantage of bi-and/or polyfunctional monomers is that they can form crosslinks in two or more directions. This allows the formation of a polymeric network. Monomers with a single functional group cannot form networks.

Preferably, the polyfunctional monomers of the masterbatch are trifunctional monomers. More preferably, the masterbatch comprises bi-and/or polyfunctional monomers selected from triallyl isocyanurate (TAIC), triallyl cyanurate (TAC), trimethylallyl isocyanurate (TMAIC), triallyl trimellitate (TAM), diallyl phthalate (DAP), trimethylolpropane triacrylate (TMPTA), trimethylolpropane trimethacrylate (TRIM) and mixtures thereof; even more preferably the masterbatch comprises trifunctional triallyl esters of isocyanurate. Trifunctional monomers are particularly advantageous. It is thought that they ensure cross-linking in three dimensions and allow the formation of a particularly regular three-dimensional network. This may contribute to improved mechanical properties and thermal stability of the component according to the invention.

Preferably, the bi-and/or polyfunctional monomers of the masterbatch may be present in a physical solution.

Preferably, the masterbatch polymer is selected from polyamides, polyurethanes, polyalkenes, polyvinyls, polyterephtalates, polyester, poly-ether, polyacrylates, polymethacrylates, ionomers, copolymers and mixtures thereof. More preferably the masterbatch polymer is a polyamide, even more preferably the masterbatch polymer is selected from PA 6, PA 6.6, PA 6.9, PA 6.12, PA 11 and/or PA 12 or mixtures thereof. Still even more preferably, the masterbatch polymer is PA 6 or PA 6.6, or mixtures thereof; most preferably, the masterbatch polymer is PA 6.6. In contrast to the raw polyamide in the composition, the polyamide that may be present in the masterbatch preferably does not comprise crosslinkable residues.

The masterbatch polymer preferably comprises less than 1 wt.-% of water, more preferably less than 0.5 wt.-% of water, even more preferably less than 0.1 wt.-% of water, wherein wt.-% refers to the total weight of the masterbatch.

The masterbatch can preferably be in tableted or pelleted form, or in the form of a granulate. More preferably, the masterbatch is in the form of a granulate.

Preferably, the mineral filler of the composition according to the present invention is selected from talcum, chalk, calcium carbonate, and mixtures thereof. More preferably, the mineral filler is selected from chalk, calcium carbonate, and mixtures thereof. Most preferred are calcium carbonate mineral fillers. An example of a commercially available suitable mineral filler according to the present invention is Omyacarb 5GU (Omya, Swit-zerland). Suitable mineral fillers can improve the workability and mechanical stability of the composition and components made of the composition. Natural fillers like talcum, chalk, calcium carbonate, and mixtures thereof are environmentally friendly as they replace polymer based binders in the composition that have a higher carbon footprint.

Preferably, the additives of the composition according to the present invention are selected from pigments, dyes, processing aids, lubricants, and anti-aging agents.

A preferred composition according to the present invention comprises:
42 to 47 wt.-% of raw polyamides, preferably selected from PA 6 and PA6.6,
32 to 37 wt.-% mineral filler,
8 to 12 wt.-% of a masterbatch, and
0 to 12 wt.-% additives,
   wherein the masterbatch comprises bi-and/or polyfunctional monomers and a masterbatch polymer, and wherein wt.-% refers to the total weight of the composition.

Preferably, the composition is essentially free of halogen- and phosphorus-based flame retardants. Halogen- and phosphorus-based flame retardants as understood in the context of the present invention include halogens, halogen containing compounds, phosphorus, phosphorus containing compounds, and compounds containing halogen and phosphorus. "Essentially free" means, the composition contains less than 0.1 wt.-% of halogens, halogen containing compounds, phosphorus, phosphorus containing compounds, and compounds containing halogen and phosphorus, based on the total weight of the composition. Halogens, halogen containing compounds, phosphorus, phosphorus containing compounds, and compounds containing halogen and phosphorus are often used in thermoplastic compositions for household appliances and office automation equipment to impart flame retardancy. However, these compounds have detrimental effects on the environment and should be avoided.

It is an advantage of the composition used according to the present invention and the components made of the composition that they are preferably essentially free of halogen- and phosphorus-based flame retardants such as halogens, halogen containing compounds, phosphorus, phosphorus containing compounds, and compounds containing halogen and phosphorus. Preferably, the component and composition according to the present invention comprise an amount of less than 0.1 wt.-%, based on the total weight of the composition or component, respectively. More preferably, the composition or component comprises less than 0.05 wt.-%, even more preferably less than 0.001 wt.-% of halogens, halogen containing compounds and phosphorus, phosphorus containing compounds, and compounds containing halogen and phosphorus based on the total weight of the composition or component, respectively. Most preferably, the composition or component comprises 0 wt.-% (which means free of) of halogens, halogen containing compounds and phosphorus, phosphorus containing compounds, and compounds containing halogen and phosphorus, based on the total weight of the composition. This means that most preferably, the amount of halogens, halogen containing compounds and phosphorus, phosphorus containing compounds, and compounds containing halogen and phosphorus is below the detection limit.

One further advantage of the present invention is that the components according to the invention pass the requirements for tax reduction according to the Swedish chemical tax regulation 1067 (SFS 2016:1067).for household appliances. The components according to the invention are therefore cost-efficient.

Examples for halogen containing compounds as understood by the present invention are organohalogen compounds including organo-chlorines such as chlorendic acid derivatives and chlorinated paraffins, organobromines such as decabromodiphenyl ether (decaBDE), decabromodiphenyl ethane (a replacement for decaBDE), polymeric brominated compounds such as brominated polystyrenes, brominated carbonate oligomers (BCOs), brominated epoxy oligomers (BEOs), tetrabromophthalic anyhydride, tetrabromobisphenol A (TBBPA) and hexabromocyclododecane (HBCD.).

Examples for phosphorus containing compounds as understood by the present invention are organophosphorus compounds including organophosphates such as triphenyl phosphate (TPP), resorcinol bis(diphenylphosphate) (RDP), bisphenol A diphenyl phosphate (BADP), and tricresyl phosphate (TCP); phosphonates such as dimethyl methylphosphonate (DMMP); and phosphinates such as aluminium diethyl phosphinate.

Examples for compounds containing both phosphorus and a halogen include tris(2,3-dibromopropyl) phosphate (brominated tris) and chlorinated organophosphates such as tris(1,3-dichloro-2-propyl)phosphate (chlorinated tris or TDCPP) and tetrakis(2-chlorethyl) dichloroisopentyl-diphosphate.

Further examples for halogens, halogen containing compounds, phosphorus, phosphorus containing compounds, and compounds containing halogen and phosphorus are listed in the annex of the Swedish chemical tax regulation 1067 (SFS 2016:1067) for household appliances.

A particularly preferred composition according to the present invention comprises:
42 to 46 wt.-% of PA 6.6,
32 to 37 wt.-% of calcium carbonate,
8 to 12 wt.-% of a masterbatch, and
0 to 12 wt.-% additives,
   wherein wt.-% refers to the total weight of the composition, and wherein the masterbatch comprises 20 to 30 wt.-% triallylisocyanurat and 70 to 80 wt.-% of polyamide based on the total weight of the masterbatch. More preferably, the masterbatch comprises PA 6.6. Even more preferably, the masterbatch comprises a polyamide with building blocks of the following formula **-[-CO-(CH₂)₄-CO-NH]-.**

The component according to the present invention may be formed from the composition by extrusion, injection molding, blowing or deep drawing. Preferably, the component according to the present invention is an injection molded part.

Preferably, the component according to the present invention is a housing of a hob, or a cooling channel of a microwave oven. Even though being essentially free of halogens, halogen containing compounds, phosphorus, phosphorus containing compounds, and compounds containing halogen and phosphorus, the component exhibits excellent flame retardancy and dimensional stability under elevated temperature. Therefore, using the component according to the present invention as part of a household appliance that is exposed to elevated temperature, as e.g. a housing of a hob, or a cooling channel of an oven or microwave oven is particularly advantageous. The housing may preferably house the power electronics, the control electronics and/or the fan of the hob. In addition, the component according to the invention is particularly suitable for use as a mains terminal, the interface carrier, the power-board casing, circuit boards of power boards, UI electronics, zone illumination, induction coils, the wiring insulation of mains cord, the power board casing with integrated interface carrier, or the oven drawer.

According to the invention are also household appliances and/or office automation equipment comprising the component described herein and a method for manufacturing thereof.

The component according to the present invention can be manufactured by performing the following steps:
a) providing the composition,
b) melting the composition,
c) forming the component by extrusion, injection molding, blowing or deep drawing of the composition, and
d) curing the composition by radiation treatment.

It is one further advantage of the composition of the component according to the present invention that it has good processability, like a thermoplastic material, but also has good mechanical properties like a duroplast.

The melting step may be performed in any suitable crucible according to the state of the art.

Preferably, the radiation treatment is selected from UV-, β-, gamma- and electron beam radiation treatment. More preferably, the radiation treatment is selected from β- and gamma-radiation treatment. Even more preferred is β-radiation treatment, particularly a predetermined number of repeated β-radiation treatment steps, for example three repeated steps. Thereby each β-radiation treatment step may be carried out with a predetermined same or different energy dose. Accordingly, an exemplary treatment may comprise three consecutive steps of β-radiation treatment each with an energy dose of **33kGy.**

Preferably, the component is formed by injection molding.

### Examples

### Example 1

A component (Teknor Apex Plastic HOC Box) comprising 53.6 % PA 6.6 as a raw polymer, 35.7 % of a mineral filler, and 10.7 % of the masterbatch was manufactured according to the present invention. The composition was injection molded and treated using β-radiation at about 100 kGy in a radiation chamber for several hours.

A Glow Wire Test was performed according to IEC 60695-2-12 at 750°C and 850°C using a test piece of example 1. The test duration was 30 sec. There was no ignition during and after the test, no burning drops fall down. The example passed the test.

The component of example 1 was also tested for dimensional stability under stress at elevated temperature using the ball pressure test according to IEC 60695-10-2 for plastic parts. The test temperature (T max required) was 200°C. The test time was 1 hour and the target point diameter was below 2 mm. After the test the point diameter was 1.36 mm. The component passed the test.

### Example 2

A component (Alternative for cooling channel creamid-C3H2G5FRS) comprising 53.6 % PA 6.6 as a raw polymer, 35.7 % of a mineral filler, and 10.7 % of the masterbatch was manufactured according to the present invention. The composition was injection molded and treated using β-radiation at about 100 kGy in a radiation chamber for several hours.

A Glow Wire Test was performed according to IEC 60695-2-12 at 750°C and 850°C using a test piece of example 2. The test duration was 30 sec. There was no ignition during and after the test, no burning drops fall down. The example passed the test.

## Claims

1. Component for electrical household appliances made of a composition comprising:
40 to 50 wt.-% of raw polyamides,
30 to 40 wt.-% mineral filler,
5 to 15 wt.-% of a masterbatch, and
0 to 15 wt.-% additives,
wherein the masterbatch comprises bi-and/or polyfunctional monomers and a masterbatch polymer, and wherein wt.-% refers to the total weight of the composition.

2. Use of a composition comprising:
40 to 50 wt.-% of raw polyamides,
30 to 40 wt.-% mineral filler,
5 to 15 wt.-% of a masterbatch, and
0 to 15 wt.-% additives,
wherein the masterbatch comprises bi-and/or polyfunctional monomers and a masterbatch polymer, and wherein wt.-% refers to the total weight of the composition,
for manufacturing a flame resistant component for electrical household appliances.

3. Component or use according to claim 1 or use according to claim 2, wherein the masterbatch comprises 1 to 45 wt.-% bi- and/or polyfunctional monomers; and 55 to 99 wt.-% of a masterbatch polymer, wherein wt.-% refers to the total weight of the masterbatch.

4. Component or use according to any of claims 1 to 3, wherein the raw polyamides are selected from PA 6, PA 6.6, PA 6.9, PA 6.12, PA 11 and/or PA 12 or mixtures thereof.

5. Component or use according to any of claims 1 to 4, wherein the mineral filler is selected from talcum, chalk, calcium carbonate, and mixtures thereof.

6. Component or use according to any of claims 1 to 5, wherein the additives are selected from pigments, dyes, processing aids, lubricants, and anti-aging agents.

7. Component or use according to any of claims 1 to 6, wherein the composition contains less than 0.1 wt.-% of halogens, halogen containing compounds, phosphorus, phosphorus containing compounds, and compounds containing halogen and phosphorus, based on the total weight of the composition.

8. Component or use according to any of claims 1 to 7, wherein the masterbatch comprises bi-and/or polyfunctional monomers selected from triallyl isocyanurate (TAIC), triallyl cyanurate (TAC), trimethylallyl isocyanurate (TMAIC), triallyl trimellitate (TAM), diallyl phthalate (DAP), trimethylolpropane triacrylate (TMPTA), trimethylolpropane trimethacrylate (TRIM) and mixtures thereof; preferably the masterbatch comprises trifunctional triallyl esters of isocyanurate.

9. Component or use according to any of claims 1 to 8, wherein the masterbatch polymer is selected from polyamides, polyurethanes, polyalkenes, polyterephtalates, polyester, poly-ether, polyacrylates, polymethacrylates, copolymers and mixtures thereof, preferably the masterbatch polymer is a polyamide, selected from PA 6, PA 6.6, PA 6.9, PA 6.12, PA 11 and/or PA 12 or mixtures thereof.

10. Component or use according to any of claims 1 to 9, wherein the composition is radiation curable.

11. Component or use according to any of claims 1 to 10, wherein the composition comprises
42 to 47 wt.-% of raw polyamides, preferably selected from PA 6 and PA6.6,
32 to 37 wt.-% mineral filler,
8 to 12 wt.-% of a masterbatch, and
0 to 12 wt.-% additives,
wherein the masterbatch comprises bi-and/or polyfunctional monomers and a masterbatch polymer, and wherein wt.-% refers to the total weight of the composition.

12. Component or use according to any of claims 1 to 11, wherein the masterbatch comprises 20 to 30 wt.-% bi-and/or polyfunctional monomers; and 70 to 80 wt.-% of a masterbatch polymer, wherein wt.-% refers to the total weight of the masterbatch.

13. Component or use according to any of claims 1 to 12, wherein the component is a molded part.

14. Component or use according to any of claims 1 to 13, wherein the component is a housing component of a hob, or a cooling channel of a microwave oven.

15. Housing component of a hob according to claim 14, wherein the housing component houses the power electronics, the control electronics and/or the fan of the hob.

16. Household appliance comprising the component according to any of the preceding claims.

17. Method for manufacturing a household appliance wherein the component according to any of claims 1 or 3 to 15 is used.

18. Method for manufacturing the component according to any of claims 1 or 3 to 15 comprising:
providing the composition,
melting the composition,
forming the composition by extrusion, injection molding, blowing or deep drawing, and
curing the composition by radiation treatment.
